# FASCICULE DE BREVET EUROPEEN

(11) **EP 4 115 593 B1**
(45) Date de publication et mention de la délivrance du brevet: **20.12.2023**
(21) Numéro de dépôt: 21706354.4
(22) Date de dépôt: 28.01.2021
(51) Int. Cl.: H04L 67/12, H04L 69/08, H04L 69/18, H04L 67/51

(54) **RÉSEAU ET PROCÉDÉ DE COMMUNICATION DE VÉHICULE**
FAHRZEUGKOMMUNIKATIONSNETZWERK UND -VERFAHREN
VEHICLE COMMUNICATION NETWORK AND METHOD

(30) Priorité: 04.03.2020 FR 2002174
(43) Date de publication de la demande: 11.01.2023
(73) Titulaire: Stellantis Auto SAS, 78300 Poissy (FR)
(72) Inventeur: LIN, Trista, 28210 VILLEMEUX SUR EURE (FR); ABDEDDAIM, Nazim, 92130 ISSY LES MOULINEAUX (FR)
(86) Numéro de dépôt international: PCT/FR2021/050158
(87) Numéro de publication internationale: WO 2021/176151

(56) Documents cités:
- US-A1- 2014 136 589
- US-A1- 2017 072 876

## Description

### Domaine technique de l'invention

La présente invention concerne de manière générale un réseau de communication et un procédé de communication pour un véhicule automobile, dans le cas où de multiples calculateurs sont embarqués dans le véhicule, et n'utilisent pas forcément les mêmes protocoles de communication.

### État de la technique

Il est connu dans l'art antérieur de prévoir un véhicule avec de multiples calculateurs dont certains n'utilisent pas le même protocole de communication. En particulier, le document US20140086242 décrit un routage particulier de messages en fonction du protocole du message. Cependant, ce système n'est pas versatile, car il n'existe qu'un nombre prédéfini de routages, et de protocoles utilisés. Cependant, le nombre de protocoles et de routage utilisés par les calculateurs d'un véhicule varie en fonction de chaque modèle de véhicule, en fonction des options au sein d'un même modèle et même désormais en fonction chaque véhicule quand le client choisit de connecter un appareil nomade ou un autre. En conséquence, le système ci-dessus décrit avec une architecture qui est supposée connue dès le début ne peut être utilisé, ou nécessite un grand nombre de références. Le document US 2017/072876 A1 (RAJAN RAJESH PADINZHARA [IN] ET AL) 16 mars 2017 (2017-03-16) traite d'une traduction de protocoles.

### Présentation de l'invention

Un but de la présente invention est de répondre aux inconvénients de l'art antérieur mentionnés ci-dessus et en particulier, tout d'abord, de proposer un réseau de communication et/ou un procédé de communication utilisable(s) dans un véhicule automobile embarquant une pluralité de calculateurs de véhicule, utilisant au moins deux protocoles de communication différents, sans pour autant requérir de lourdes opérations de configuration et/ou de multiples références.

Pour cela un premier aspect de l'invention concerne un réseau de communication de véhicule, comprenant :
- une pluralité de calculateurs de véhicule, utilisant au moins deux protocoles de communication différents, chacun de la pluralité de calculateurs comprenant un répertoire de services stockant chacun un inventaire de services du calculateur listant, pour chaque service, au moins un protocole de communication et un routage de communication du calculateur,
- au moins une passerelle de communication, connectée à chacun de la pluralité de calculateurs, comprenant une unité de découverte, une unité de cartographie, et une unité de passerelle,

- dans lequel l'unité de découverte est agencée pour envoyer des messages de découverte de service à chacun des répertoires de services de la pluralité de calculateurs, pour recevoir en retour de chacun des répertoires de services l'inventaire de services de chaque calculateur,
- dans lequel l'unité de cartographie est agencée pour stocker et mettre à jour une carte de services avec les inventaires de service reçus de chacun des calculateurs, de sorte à pouvoir identifier un protocole de communication et un routage de communication associé à un message de service,
- dans lequel l'unité de passerelle est agencée pour :
   - recevoir, de l'un des calculateurs, un message de service destiné à un autre des calculateurs,
   - envoyer à l'unité de cartographie une requête d'identification, dans la carte de services, du message de service,
   - recevoir de l'unité de cartographie l'identification du protocole de communication et du routage de communication associés au dit message de service reçu et à utiliser pour envoyer le message de service à l'autre des calculateurs,
   - envoyer, à l'autre des calculateurs, le message de service en utilisant le protocole de communication et le routage de communication identifiés.

Selon l'invention, les calculateurs sont embarqués dans le véhicule, et la passerelle effectue, via l'unité de découverte, une scrutation vers chacun des calculateurs, pour recevoir en réponse les services effectués, avec leurs principales caractéristiques (protocole à utiliser, adresse ou routage). Ainsi une carte de services peut être dressée et maintenue pour ensuite identifier, lors de la réception d'un message émis par un premier calculateur, à quel autre deuxième calculateur il est destiné et selon quel protocole il doit être traduit le cas échéant. Cette phase de scrutation initiale ou d'apprentissage permet de s'adapter à tout véhicule, et même à des modifications du réseau d'un même véhicule.

Le réseau de communication est embarqué, si bien que la passerelle est elle-même embarquée, mais elle peut très bien être agencée pour communiquer avec des calculateurs ou des serveurs distants ou débarqués du véhicule.

On peut prévoir que la passerelle comprenne :
- des ports de communication dédiés à certains protocoles de communication prédéterminés, conformes par exemple à des protocoles de communication dédiés à l'automobile (tels qu'un protocole de diagnostic internet (DoIP), un protocole de commande de message intermédiaire (SOME/IP), un protocole de découverte de service (SOME/IP-SD)...), et
- des ports de communication dédiés à certains autres protocoles de communication prédéterminés non liés au domaine automobile (protocole de publication-abonnement (MQTT), protocole de transfert hypertextuel sécurisé (HTTPs), protocole de communication pour navigateur internet (WebSocket)...).

Avantageusement, l'unité de passerelle est agencée pour :
- recevoir, de l'un des calculateurs, le message de service selon un premier protocole de communication,
- envoyer, à l'autre des calculateurs, le message de service en utilisant un deuxième protocole de communication, différent du premier protocole de communication.

Avantageusement, le répertoire de services comprend, en plus du protocole de communication et du routage de communication du calculateur :
- le nom du service, et/ou
- un nom et/ou adresse de port de communication du calculateur ; et/ou
- un nom et/ou adresse de calculateur du calculateur ; et/ou
- un nom et/ou adresse de sous réseau du calculateur.

Avantageusement, l'unité de découverte est agencée pour envoyer des messages de découvertes à intervalles réguliers, par exemple :
- lors d'un démarrage du véhicule,
- lors de la détection de la connexion d'un nouveau calculateur,
- lors d'une phase de réinitialisation. En d'autres termes, une scrutation du réseau est régulière, dans le but de mettre à jour la carte des services.

Un deuxième aspect de l'invention est relatif à un véhicule automobile comprenant un réseau de communication selon le premier aspect de l'invention.

Un troisième aspect de l'invention concerne un procédé de communication mis en oeuvre par le réseau de communication selon le premier aspect de l'invention, comprenant une phase d'apprentissage avec les étapes consistant à:
- envoyer des messages de découverte de service à chacun des répertoires de services de la pluralité de calculateurs,
- recevoir en retour de chacun des répertoires de services l'inventaire de services de chaque calculateur,
- stocker et mettre à jour une carte de services avec les inventaires de services reçus de chacun des calculateurs, de sorte à pouvoir identifier un protocole de communication et un routage de communication associé à un message de service.

Avantageusement, l'étape d'envoi des messages de découverte de service à chacun des répertoires de services de la pluralité de calculateurs est réitérée de manière régulière, par exemple :
- lors d'un démarrage du véhicule,
- lors de la détection de la connexion d'un nouveau calculateur,
- lors d'une phase de réinitialisation.

Avantageusement, le procédé de communication comprend une étape préliminaire consistant à charger, dans chacun de la pluralité de calculateurs, le répertoire de services stockant chacun un inventaire de services du calculateur listant, pour chaque service, au moins un protocole de communication et un routage de communication du calculateur.

Avantageusement, le procédé de communication comprend une phase de communication avec les étapes consistant à :
- recevoir, de l'un des calculateurs, un message de service destiné à un autre des calculateurs,
- envoyer à l'unité de cartographie une requête d'identification, dans la carte de services, du message de service,
- recevoir l'identification du protocole de communication et du routage de communication associés au dit message de service reçu et à utiliser pour envoyer le message de service à l'autre des calculateurs,
- envoyer, à l'autre des calculateurs, le message de service en utilisant le protocole de communication et le routage de communication identifiés.

Avantageusement, le répertoire de services comprend, en plus du protocole de communication et du routage de communication du calculateur :
- le nom du service, et/ou
- un nom et/ou adresse de port de communication du calculateur ; et/ou
- un nom et/ou adresse de calculateur du calculateur ; et/ou
- un nom et/ou adresse de sous réseau du calculateur.

Un quatrième aspect de l'invention concerne un programme d'ordinateur comprenant des instructions de code de programme pour l'exécution des étapes du procédé de communication selon le troisième aspect de l'invention, lorsque ledit programme est exécuté sur un ordinateur.

Un cinquième aspect de l'invention concerne un produit programme d'ordinateur comprenant des instructions de code de programme enregistré sur un support utilisable dans un ordinateur, comprenant des moyens de programmation lisibles par ordinateur pour effectuer les étapes du procédé de communication selon le troisième aspect de l'invention, lorsque ledit programme fonctionne sur un ordinateur.

### Description des dessins

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue générale d'un véhicule embarquant une pluralité de calculateurs de véhicule, utilisant au moins deux protocoles de communication différents, connectés entre eux par une passerelle de communication ;
[fig. 2] représente une première étape d'une phase d'auto-apprentissage d'un procédé de communication entre les différents calculateurs ;
[fig. 3] représente une deuxième étape d'une phase d'auto-apprentissage d'un procédé de communication entre les différents calculateurs ;
[fig. 4] représente une phase de communication entre deux calculateurs parmi les différents calculateurs du véhicule.

### Description détaillée de l'invention

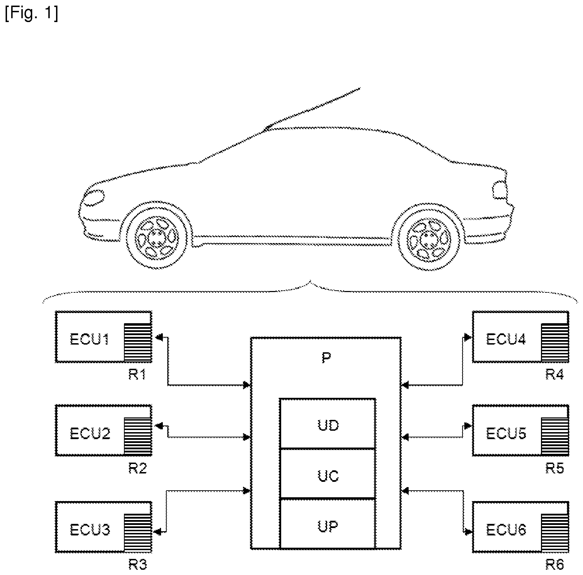

La figure 1 représente un véhicule embarquant plusieurs calculateurs ECU1 à ECU6 selon cet exemple simplifié. Chaque calculateur ECU1 - ECU6 comprend typiquement une unité de calcul, une ou plusieurs unité de mémoire, et en particulier chaque calculateur ECU1 - ECU6 comprend un répertoire de services noté R1 à R6 respectivement. On appelle typiquement ici service des fonctions assurées par les calculateurs, ou toute opération de contrôle ou de commande.

Selon l'exemple représenté, on définit que les calculateurs ECU1-ECU3 sont des calculateurs automobiles (typiquement construits selon une architecture conforme au standard AUTOSAR), c'est-à-dire qu'ils sont dédiés au fonctionnement du véhicule. Il peut s'agir de calculateurs moteur, de calculateurs de sécurité, de calculateurs pilotant des organes du véhicule tels qu'un groupe de climatisation, un autoradio... A tire d'exemple, les calculateurs ECU1-ECU3 peuvent mettre un oeuvre des protocoles de communication spécifiques liés au domaine automobile, tels qu'un protocole de diagnostic internet (DoIP), un protocole de commande de message intermédiaire (SOME/IP), un protocole de découverte de service (SOME/IP-SD)...

Les calculateurs ECU3 - ECU6 selon l'exemple représenté ne sont pas des calculateurs automobiles, et fonctionnent sous d'autres systèmes (UNIX, Linux, Andraoid...) en utilisant d'autres protocoles (protocole de publication-abonnement (MQTT), protocole de transfert hypertextuel sécurisé (HTTPs), protocole de communication pour navigateur internet (WebSocket))... Par exemple, les calculateurs ECU3 - ECU6 peuvent être connectés à des réseaux distants via internet (ondes radio 3G, 4G, 5G, Wifi, USB, Bluetooth...)

L'invention propose de manière schématique une passerelle P représentée figure 1 entre les calculateurs ECU1-ECU6, qui comprend une unité de découverte UD, une unité de cartographie UC, et une unité de passerelle UP. Chaque calculateur ECU1-ECU6 est connecté avec la passerelle pour transmettre des messages de service. Typiquement, un message de service est relatif à une demande de service, c'est à dire une demande de fonction, d'opération effectuée par un calculateur, et demandée par un autre calculateur (envoi d'une demande d'affichage, une demande de commande d'une organe du véhicule...).

A cet effet, l'invention propose un procédé de communication avec une phase d'apprentissage et ensuite une phase de communication. Lors de la phase d'apprentissage, la passerelle va effectuer une scrutation de chaque calculateur ECU1-ECU6 pour dresser la liste des services que chaque calculateur ECU1-ECU6 propose, afin de pouvoir identifier, lors de la phase de communication un message de service envoyé par un calculateur et le diriger vers un autre calculateur en utilisant le protocole de communication et le routage adéquats.

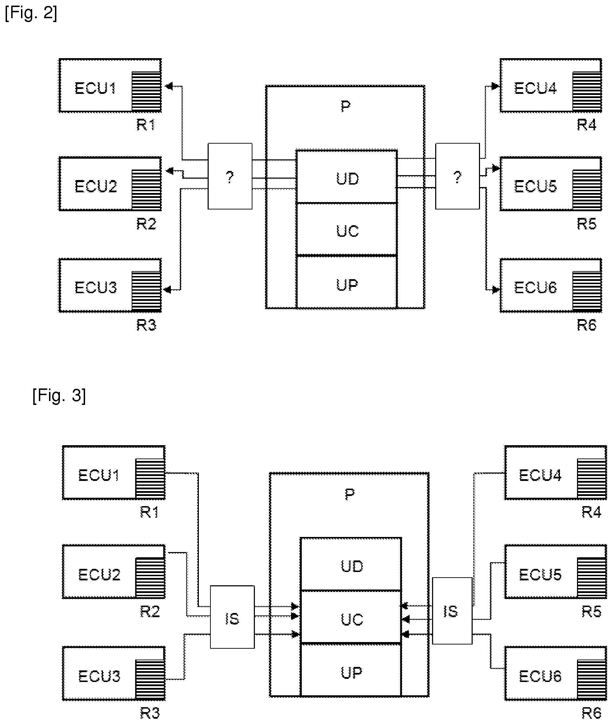

En particulier, la figure 2 représente une première étape de la phase d'apprentissage, durant laquelle l'unité de découverte UD de la passerelle P envoie à chacun des calculateurs ECU1 à ECU6 un message de découverte de service.

En réponse, comme représenté figure 3, chaque répertoire de services R1-R6 envoie à la passerelle P, et en particulier à l'unité de cartographie UC, un inventaire de services IS, qui contient notamment, pour chaque service proposé par le calculateur en question :
- au moins le nom ou type de protocole de communication utilisé par le calculateur,
- au moins le routage de communication du calculateur,
- au moins le nom du service, et/ou
- par exemple un nom et/ou adresse de port de communication du calculateur ; et/ou
- par exemple un nom et/ou adresse de calculateur du calculateur ; et/ou
- par exemple un nom et/ou adresse de sous réseau du calculateur.

L'unité de cartographie UC peut donc stocker toutes ces informations reçues, pour dresser une carte de services, qui intègre les inventaires de services IS de chacun des calculateurs ECU1-ECU6. En conséquence, à la suite de cette scrutation de la phase d'apprentissage, l'unité de cartographie regroupe dans la carte de service tous les services des calculateurs ECU1-ECU6 du véhicule, avec au moins le nom du service, le protocole utilisé et un routage à utiliser.

A ce stade, la passerelle est alors capable de retrouver un service proposé et d'identifier le protocole de communication à utiliser, ainsi que le routage de communication associé. On peut bien sûr prévoir de réitérer cette phase de scrutation ou d'apprentissage pour maintenir à jour la carte de services, pour prendre en compte des changements dans les calculateurs connectés au réseau du véhicule. On peut effectuer cette phase d'apprentissage à chaque démarrage du véhicule, de manière régulière (tous les jours, toutes les heures...), ou lors d'une opération de maintenance ou de mise à jour du système informatique du véhicule.

En tout état de cause, une fois la phase d'apprentissage terminée et une première version de carte de services définie, une phase de communication peut être effectuée en utilisant la passerelle P.

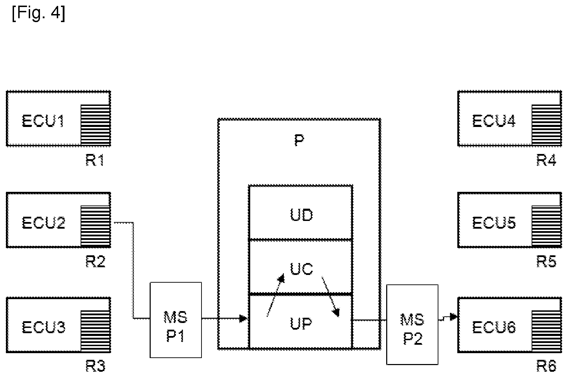

Selon l'exemple de la figure 4, le calculateur ECU2 envoie un message de service MS à l'unité de passerelle UP de la passerelle P, selon un premier protocole de communication P1. A réception de ce message de service MSP1, l'unité de passerelle UP peut interroger l'unité de cartographie UC pour identifier le destinataire de ce message de service et le protocole de communication à utiliser dans la carte de services. En retour, l'unité de cartographie donne à l'unité de passerelle les données relative au service en question, grâce aux données récoltées lors de la phase d'apprentissage, à savoir au moins le (deuxième) protocole de communication et le routage de communication associés au service en question.

En conséquence, l'unité de passerelle UP peut traduire le message de service dans le protocole de communication à utiliser, le deuxième protocole de communication P2 et envoyer le message de service MS selon le routage de communication identifié, c'est-à-dire au calculateur ECU6 dans cet exemple.

On comprendra que diverses modifications et/ou améliorations évidentes pour l'homme du métier peuvent être apportées aux différents modes de réalisation de l'invention décrits dans la présente description sans sortir du cadre de l'invention.

Il est à noter que la passerelle P est représentée d'un seul bloc qui englobe l'unité de découverte UD, l'unité de cartographie UC, et l'unité de passerelle UP, mais on peut prévoir une architecture distribuée ou éclatée, ou même dupliquée avec soit des passerelles P multiples, et/ou des unités de découverte UD, des unités de cartographie UC, et des unités de passerelle UP distinctes et séparées.

De même, les calculateurs ECU1-ECU6 peuvent partager un répertoire de services en commun, ou en comporter plusieurs, selon les besoins.

## Revendications

1. Réseau de communication de véhicule, comprenant :
- une pluralité de calculateurs (ECU1-ECU6) de véhicule, agencés pour utiliser au moins deux protocoles de communication (P1, P2) différents, chacun de la pluralité de calculateurs (ECU1-ECU6) comprenant un répertoire de services (R1-R6) stockant un inventaire de services (IS) du calculateur (ECU1-ECU6) listant, pour chaque service, au moins un protocole de communication (P1, P2) et au moins un routage de communication du calculateur (ECU1-ECU6),
- au moins une passerelle de communication (P), connectée à chacun de la pluralité de calculateurs (ECU1-ECU6), comprenant une unité de découverte (UD), une unité de cartographie (UC), et une unité de passerelle (UP),
• dans lequel l'unité de découverte (UD) est agencée pour envoyer des messages de découverte de service à chacun des répertoires de services (R1-R6) de la pluralité de calculateurs (ECU1-ECU6), pour recevoir en réponse de chacun des répertoires de services (R1-R6) l'inventaire de services (IS) de chaque calculateur (ECU1-ECU6),
• dans lequel l'unité de cartographie (UC) est agencée pour stocker et mettre à jour une carte de services avec les inventaires de service (IS) reçus de chacun des calculateurs (ECU1-ECU6), de sorte à pouvoir identifier un protocole de communication (P1, P2) et un routage de communication associé à un message de service (MS),
• dans lequel l'unité de passerelle (UP) est agencée pour :
- recevoir, de l'un des calculateurs (ECU1-ECU6), un message de service (MS) destiné à un autre des calculateurs (ECU1-ECU6),
- envoyer à l'unité de cartographie (UC) une requête d'identification, dans la carte de services, du message de service (MS),
- recevoir de l'unité de cartographie l'identification du protocole de communication (P1, P2) et du routage de communication associés au dit message de service (MS) reçu et à utiliser pour envoyer le message de service (MS) à l'autre des calculateurs (ECU1-ECU6),
- envoyer, à l'autre des calculateurs (ECU1-ECU6), le message de service (MS) en utilisant le protocole de communication (P1, P2) et le routage de communication identifiés.

2. Réseau de communication selon la revendication précédente, dans lequel l'unité de passerelle (UP) est agencée pour :
- recevoir, de l'un des calculateurs (ECU1-ECU6), le message de service (MS) selon un premier protocole de communication (P1),
- envoyer, à l'autre des calculateurs (ECU1-ECU6), le message de service (MS) en utilisant un deuxième protocole de communication (P2), différent du premier protocole de communication (P1).

3. Réseau de communication selon l'une des revendications précédentes, dans lequel le répertoire de services (R1-R6) comprend, en plus du protocole de communication (P1, P2) et du routage de communication du calculateur (ECU1-ECU6) :
- le nom du service, et/ou
- un nom et/ou adresse de port de communication du calculateur (ECU1-ECU6) ; et/ou
- un nom et/ou adresse de calculateur du calculateur (ECU1-ECU6) ; et/ou
- un nom et/ou adresse de sous réseau du calculateur (ECU1-ECU6).

4. Véhicule automobile comprenant un réseau de communication selon l'une des revendications 1 à 3.

5. Procédé de communication mis en oeuvre par le réseau de communication selon l'une des revendications 1 à 3, comprenant une phase d'apprentissage avec les étapes consistant à:
- envoyer des messages de découverte de service à chacun des répertoires de services (R1-R6) de la pluralité de calculateurs (ECU1-ECU6),
- recevoir en réponse de chacun des répertoires de services (R1-R6) l'inventaire de services (IS) de chaque calculateur (ECU1-ECU6),
- stocker et mettre à jour une carte de services avec les inventaires de service (IS) reçus de chacun des calculateurs (ECU1-ECU6), de sorte à pouvoir identifier un protocole de communication (P1, P2) et un routage de communication associé à un message de service (MS).

6. Procédé de communication selon la revendication précédente, comprenant une étape préliminaire consistant à charger, dans chacun de la pluralité de calculateurs (ECU1-ECU6), le répertoire de services (R1-R6) stockant un inventaire de services (IS) du calculateur (ECU1-ECU6) listant, pour chaque service, au moins un protocole de communication (P1, P2) et un routage de communication du calculateur (ECU1-ECU6).

7. Procédé de communication selon l'une des revendications 5 ou 6, comprenant une phase de communication avec les étapes consistant à :
- recevoir, de l'un des calculateurs (ECU1-ECU6), un message de service (MS) destiné à un autre des calculateurs (ECU1-ECU6),
- envoyer à l'unité de cartographie (UC) une requête d'identification, dans la carte de services, du message de service (MS),
- recevoir l'identification du protocole de communication (P1, P2) et du routage de communication associés au dit message de service (MS) reçu et à utiliser pour envoyer le message de service (MS) à l'autre des calculateurs (ECU1-ECU6),
- envoyer, à l'autre des calculateurs (ECU1-ECU6), le message de service (MS) en utilisant le protocole de communication (P1, P2) et le routage de communication identifiés.

8. Procédé de communication selon l'une des revendications 5 à 7, dans lequel le répertoire de services (R1-R6) comprend, en plus du protocole de communication (P1, P2) et du routage de communication du calculateur (ECU1-ECU6) :
- le nom du service, et/ou
- un nom et/ou adresse de port de communication du calculateur (ECU1-ECU6) ; et/ou
- un nom et/ou adresse de calculateur du calculateur (ECU1-ECU6) ; et/ou
- un nom et/ou adresse de sous réseau du calculateur (ECU1-ECU6).

9. Programme d'ordinateur comprenant des instructions de code de programme pour l'exécution des étapes du procédé de communication selon l'une des revendications 5 à 8, lorsque ledit programme est exécuté sur un ordinateur.

10. Produit programme d'ordinateur comprenant des instructions de code de programme enregistré sur un support utilisable dans un ordinateur, comprenant des moyens de programmation lisibles par ordinateur pour effectuer les étapes du procédé de communication selon l'une des revendications 5 à 8, lorsque ledit programme fonctionne sur un ordinateur.

## Patentansprüche

1. Fahrzeugkommunikationsnetzwerk, bestehend aus:
- mehrere Fahrzeugcomputer (ECU1-ECU6), die so angeordnet sind, dass sie mindestens zwei unterschiedliche Kommunikationsprotokolle (P1, P2) verwenden, wobei jeder der mehreren Computer (ECU1-ECU6) ein Dienstverzeichnis (R1-R6) umfasst, in dem ein Dienst gespeichert ist Inventarisierung (IS) des Computers (ECU1-ECU6), die für jeden Dienst mindestens ein Kommunikationsprotokoll (P1, P2) und mindestens ein Kommunikationsrouting des Computers (ECU1-ECU6) auflistet,
- mindestens ein Kommunikations-Gateway (P), das mit jedem der mehreren Computer (ECU1-ECU6) verbunden ist und eine Erkennungseinheit (UD), eine Zuordnungseinheit (UC) und eine Gateway-Einheit (UP) umfasst.
• wobei die Erkennungseinheit (UD) so angeordnet ist, dass sie Diensterkennungsnachrichten an jedes der Dienstverzeichnisse (R1-R6) der mehreren Computer (ECU1-ECU6) sendet, um als Antwort von jedem der Dienstverzeichnisse (R1) zu empfangen -R6) das Serviceinventar (IS) jedes Computers (ECU1-ECU6),
• wobei die Zuordnungseinheit (UC) dazu eingerichtet ist, eine Dienstzuordnung mit den von jedem der Computer (ECU1-ECU6) empfangenen Dienstinventaren (IS) zu speichern und zu aktualisieren, um ein Kommunikationsprotokoll (P1) identifizieren zu können , P2) und Kommunikationsrouting im Zusammenhang mit einer Dienstnachricht (MS),
• bei dem die Gateway-Einheit (UP) für Folgendes ausgelegt ist:
- von einem der Computer (ECU1-ECU6) eine Servicenachricht (MS) zu empfangen, die für einen anderen der Computer (ECU1-ECU6) bestimmt ist,
- Senden einer Anfrage zur Identifizierung der Servicenachricht (MS) in der Servicekarte an die Zuordnungseinheit (UC),
- von der Zuordnungseinheit die Identifikation des Kommunikationsprotokolls (P1, P2) und des Kommunikationsroutings zu empfangen, das mit der empfangenen Dienstnachricht (MS) verknüpft ist und zum Senden der Dienstnachricht (MS) an die anderen Rechner (ECU1-ECU6) verwendet werden soll ),
- Senden der Dienstnachricht (MS) an den anderen Computer (ECU1-ECU6) unter Verwendung des Kommunikationsprotokolls (P1, P2) und des identifizierten Kommunikationsroutings.

2. Kommunikationsnetzwerk nach dem vorhergehenden Anspruch, in dem die Gateway-Einheit (UP) dazu eingerichtet ist:
- von einem der Computer (ECU1-ECU6) die Dienstnachricht (MS) gemäß einem ersten Kommunikationsprotokoll (P1) zu empfangen,
- Senden der Dienstnachricht (MS) an den anderen der Computer (ECU1-ECU6) unter Verwendung eines zweiten Kommunikationsprotokolls (P2), das sich vom ersten Kommunikationsprotokoll (P1) unterscheidet.

3. Kommunikationsnetzwerk nach einem der vorhergehenden Ansprüche, bei dem das Dienstverzeichnis (R1-R6) zusätzlich zum Kommunikationsprotokoll (P1, P2) und dem Computer-Kommunikationsrouting (ECU1-ECU6) umfasst:
- den Namen des Dienstes und/oder
- ein Name und/oder eine Adresse des Computer-Kommunikationsanschlusses (ECU1-ECU6); und oder
- ein Name und/oder eine Computeradresse des Computers (ECU1-ECU6); und oder
- ein Name und/oder eine Subnetzwerkadresse des Computers (ECU1-ECU6).

4. Kraftfahrzeug umfassend ein Kommunikationsnetzwerk nach einem der Ansprüche 1 bis 3.

5. Durch das Kommunikationsnetzwerk nach einem der Ansprüche 1 bis 3 implementiertes Kommunikationsverfahren, umfassend eine Lernphase mit den Schritten bestehend aus:
- Diensterkennungsnachrichten an jedes der Dienstverzeichnisse (R1-R6) der mehreren Computer (ECU1-ECU6) senden,
- als Antwort von jedem der Dienstverzeichnisse (R1-R6) das Dienstinventar (IS) jedes Computers (ECU1-ECU6) zu empfangen,
- eine Dienstkarte mit den von jedem der Computer (ECU1-ECU6) empfangenen Dienstinventaren (IS) zu speichern und zu aktualisieren, um ein Kommunikationsprotokoll (P1, P2) und ein mit einer Dienstnachricht verbundenes Kommunikationsrouting identifizieren zu können (MS).

6. Kommunikationsverfahren nach dem vorhergehenden Anspruch, umfassend einen vorbereitenden Schritt, der darin besteht, in jeden der mehreren Computer (ECU1-ECU6) das Dienstverzeichnis (R1-R6) zu laden, in dem ein Verzeichnis der Dienste (IS) gespeichert ist der Computer (ECU1-ECU6) listet für jeden Dienst mindestens ein Kommunikationsprotokoll (P1, P2) und ein Kommunikationsrouting des Computers (ECU1-ECU6) auf.

7. Kommunikationsverfahren nach einem der Ansprüche 5 oder 6, umfassend eine Kommunikationsphase mit den Schritten bestehend aus:
- von einem der Computer (ECU1-ECU6) eine Servicenachricht (MS) zu empfangen, die für einen anderen der Computer (ECU1-ECU6) bestimmt ist,
- Senden einer Anfrage zur Identifizierung der Servicenachricht (MS) in der Servicekarte an die Zuordnungseinheit (UC),
- die Identifikation des Kommunikationsprotokolls (P1, P2) und des Kommunikationsroutings zu empfangen, das mit der empfangenen Dienstnachricht (MS) verbunden ist und zum Senden der Dienstnachricht (MS) an den anderen der Computer (ECU1-ECU6) verwendet werden soll,
- Senden der Dienstnachricht (MS) an den anderen Computer (ECU1-ECU6) unter Verwendung des Kommunikationsprotokolls (P1, P2) und des identifizierten Kommunikationsroutings.

8. Kommunikationsverfahren nach einem der Ansprüche 5 bis 7, bei dem das Dienstverzeichnis (R1-R6) neben dem Kommunikationsprotokoll (P1, P2) auch das Kommunikationsrouting des Computers (ECU1-ECU6) umfasst:
- den Namen des Dienstes und/oder
- ein Name und/oder eine Adresse des Computer-Kommunikationsanschlusses (ECU1-ECU6); und oder
- ein Name und/oder eine Computeradresse des Computers (ECU1-ECU6); und oder
- ein Name und/oder eine Subnetzwerkadresse des Computers (ECU1-ECU6).

9. Computerprogramm, das Programmcodeanweisungen zum Ausführen der Schritte des Kommunikationsverfahrens nach einem der Ansprüche 5 bis 8 umfasst, wenn das Programm auf einem Computer ausgeführt wird.

10. Computerprogrammprodukt mit Programmcodeanweisungen, die auf einem in einem Computer verwendbaren Medium aufgezeichnet sind, mit computerlesbaren Programmiermitteln zum Ausführen der Schritte des Kommunikationsverfahrens nach einem der Ansprüche 5 bis 8, wenn das Programm auf einem läuft Computer.

## Claims

1. Vehicle communications network, comprising:
- a plurality of vehicle computers (ECU1-ECU6), arranged to use at least two different communication protocols (P1, P2), each of the plurality of computers (ECU1-ECU6) comprising a service directory (R1-R6) storing a service inventory (IS) of the computer (ECU1-ECU6) listing, for each service, at least one communication protocol (P1, P2) and at least one communication routing of the computer (ECU1-ECU6),
- at least one communication gateway (P), connected to each of the plurality of computers (ECU1-ECU6), comprising a discovery unit (UD), a mapping unit (UC), and a gateway unit (UP),
• in which the discovery unit (UD) is arranged to send service discovery messages to each of the service directories (R1-R6) of the plurality of computers (ECU1-ECU6), to receive in response from each of the service directories (R1-R6) the service inventory (IS) of each computer (ECU1-ECU6),
• in which the mapping unit (UC) is arranged to store and update a service map with the service inventories (IS) received from each of the computers (ECU1-ECU6), so as to be able to identify a protocol of communication (P1, P2) and communication routing associated with a service message (MS),
• in which the gateway unit (UP) is arranged to:
- receive, from one of the computers (ECU1-ECU6), a service message (MS) intended for another of the computers (ECU1-ECU6),
- send to the mapping unit (UC) a request for identification, in the service card, of the service message (MS),
- receive from the mapping unit the identification of the communication protocol (P1, P2) and the communication routing associated with said service message (MS) received and to be used to send the service message (MS) to the other calculators (ECU1-ECU6),
- send, to the other of the computers (ECU1-ECU6), the service message (MS) using the communication protocol (P1, P2) and the communication routing identified.

2. Communication network according to the preceding claim, in which the gateway unit (UP) is arranged to:
- receive, from one of the computers (ECU1-ECU6), the service message (MS) according to a first communication protocol (P1),
- send, to the other of the computers (ECU1-ECU6), the service message (MS) using a second communication protocol (P2), different from the first communication protocol (P1).

3. Communication network according to one of the preceding claims, in which the service directory (R1-R6) comprises, in addition to the communication protocol (P1, P2) and the computer communication routing (ECU1-ECU6 ):
- the name of the service, and/or
- a name and/or address of the computer communication port (ECU1-ECU6); and or
- a name and/or computer address of the computer (ECU1-ECU6); and or
- a name and/or subnetwork address of the computer (ECU1-ECU6).

4. Motor vehicle comprising a communications network according to one of claims 1 to 3.

5. Communication method implemented by the communication network according to one of claims 1 to 3, comprising a learning phase with the steps consisting of:
- send service discovery messages to each of the service directories (R1-R6) of the plurality of computers (ECU1-ECU6),
- receive in response from each of the service directories (R1-R6) the service inventory (IS) of each computer (ECU1-ECU6),
- store and update a service map with the service inventories (IS) received from each of the computers (ECU1-ECU6), so as to be able to identify a communication protocol (P1, P2) and a communication routing associated with a service message (MS).

6. Communication method according to the preceding claim, comprising a preliminary step consisting of loading, in each of the plurality of computers (ECU1-ECU6), the service directory (R1-R6) storing an inventory of services (IS) of the computer (ECU1-ECU6) listing, for each service, at least one communication protocol (P1, P2) and one communication routing of the computer (ECU1-ECU6).

7. Communication method according to one of claims 5 or 6, comprising a communication phase with the steps consisting of:
- receive, from one of the computers (ECU1-ECU6), a service message (MS) intended for another of the computers (ECU1-ECU6),
- send to the mapping unit (UC) a request for identification, in the service card, of the service message (MS),
- receive the identification of the communication protocol (P1, P2) and the communication routing associated with said service message (MS) received and to be used to send the service message (MS) to the other of the computers (ECU1-ECU6),
- send, to the other of the computers (ECU1-ECU6), the service message (MS) using the communication protocol (P1, P2) and the communication routing identified.

8. Communication method according to one of claims 5 to 7, in which the service directory (R1-R6) comprises, in addition to the communication protocol (P1, P2) and the communication routing of the computer (ECU1 -ECU6):
- the name of the service, and/or
- a name and/or address of the computer communication port (ECU1-ECU6); and or
- a name and/or computer address of the computer (ECU1-ECU6); and or
- a name and/or subnetwork address of the computer (ECU1-ECU6).

9. Computer program comprising program code instructions for executing the steps of the communication method according to one of claims 5 to 8, when said program is executed on a computer.

10. Computer program product comprising program code instructions recorded on a medium usable in a computer, comprising computer-readable programming means for carrying out the steps of the communication method according to one of claims 5 to 8 , when said program runs on a computer.
